(19) Europäisches Patentamt
European Patent Office
Office européen des brevets

(11) Publication number: **0 065 291**
**B1**

(12) # EUROPEAN PATENT SPECIFICATION

(45) Date of publication of patent specification: **04.11.87**

(51) Int. Cl.[4]: **C 08 G 69/00**

(21) Application number: **82104222.3**

(22) Date of filing: **14.05.82**

(54) **Method for producing polyamides, etc.**

(30) Priority: **18.05.81 US 264982**
**20.04.82 US 370271**
**10.05.82 US 375971**

(43) Date of publication of application:
**24.11.82 Bulletin 82/47**

(45) Publication of the grant of the patent:
**04.11.87 Bulletin 87/45**

(84) Designated Contracting States:
**AT BE CH DE FR GB IT LI LU NL**

(56) References cited:
**US-A-3 847 876**
**US-A-3 870 685**
**US-A-3 932 364**

**The file contains technical information submitted after the application was filed and not included in this specification**

(73) Proprietor: **Davy McKee Aktiengesellschaft**
**Borsigallee 1**
**D-6000 Frankfurt am Main 60 (DE)**

(72) Inventor: **Hofmann, Hansdieter**
**Frankenweg 11**
**D-6376 Karben 6 (DE)**
Inventor: **Rothe, Hans-Jochen**
**Dörnigheimer Weg 10b**
**D-6457 Maintal 2 (DE)**
Inventor: **Skupin, Georg**
**Fritz-Schubert-Ring 19**
**D-6454 Bruchköbel (DE)**
Inventor: **Wolff, Konrad**
**Florianweg 26**
**D-6000 Frankfurt am Main (DE)**

(74) Representative: **Oppermann, Ewald, Dipl.-Ing.**
**Am Wiesengrund 35**
**D-6050 Offenbach (Main) (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 065 291 B1

**Description**

The present invention relates to a method for producing spinnable polyamides of the so-called nylon by a conversion and polycondensation of dinitriles with aliphatic α,ω-diamines and excess water in the presence of catalysts of an inorganic or organic nature in catalytic quantities and whereby less than 1% by weight of ammonia is present.

The method disclosed herein is utilized for the continuous production of polyhexamethylene adipamide, Nylon-6.6, from adiponitrile and hexamethylene diamine in the presence of ammonia-containing water and small quantities of catalysts preferably oxygen-containing compounds of phosphorous which exert an accelerating influence on the total kinetics of the process, thereby facilitating a higher degree of polymerization and/or reduction in the time required for said polymerization.

Up to now, adipic acid, that could be produced only from aromatics, has been used to produce polyamides. A separate saponification of adiponitrile into adipic acid is bothersome, does not proceed well quantitatively and is therefore not considered practical. At present, adiponitrile can be produced considerably more economically electrochemically from propylene or acrylonitrile as well as catalytically by the conversion of butadiene and hydrogen cyanide on a large scale and with high purity.

At the present time, adipic acid is shipped by costly transport means, in solid form and hexamethylene diamine in a liquified state with a small amount of water in separate containers or a neutralized solution of adipic acid and hexamethylene diamine, each approximately in a 60% concentration, is shipped in heated tank cars. Aside from the difficulties in connection with longer distances, the co-shipping of approximately 40% water is costly.

The shipping of solid salt from equimolar quantities of adipic acid and hexamethylene diamine, the so-called AH-salt, does not eliminate the above difficulties. This is due to the fact that the AH-salt must be obtained in a costly manner with respect to energy by evaporation or precipitation from water or methanol. For further processing, again, a 60% AH-salt solution, increased by the water from the reaction, must be evaporated during the polycondensation.

Literature on the reaction between adiponitrile, hexamethylene diamine and water in excess does not mention an efficient technical process for the reaction. Thus, in Greenewalt, U.S. Patent No. 2,245,129, a total reaction time of more than 20 hours is required for a conversion as in example II therein. Also, in Onsager, U.S. Patent No. 3,847,876, all disadvantages, which would be alleviated by an economical, continuous working method, are not eliminated, especially because Onsager calls for a minimum content of 1% of free ammonia in the reaction product. Thus, in examples 1—10 therein, which led to spinnable products, total reaction times of more than 8 hours were required. By a recycling, as in example 3 therein, a residence time spectrum was brought about and reached, which was unfavorable and undesirable for polyhexamethylene adipamide.

From experience it has been known that, based on the thermal instability of polyhexamethylene adipamide, short residence time and good residence time spectra are desirable, in all phases of the method, and which become more critical with an increasing degree of polycondensation and with increasing temperatures. It is with this background that the present invention was developed.

Summary of the invention

It is an object of the present invention to provide a method for the production of spinnable polyamides, specifically spinnable polyhexamethylene adipamide of high molecular weight from adiponitrile, hexamethylene diamine, water and additives, preferably continuously in a reaction cascade and in a finisher as the final stage, accelerated by catalysts, and such conditions of reaction, which will produce less than 1% of free ammonia in the reaction product at a temperature of more than 225°C.

It is a further object of the present invention to provide an economical method for the production of spinnable polyhexamethylene adipamide which avoids the use of adipic acid and uses, instead, adiponitrile that is economically produced from reasonably priced raw materials, such as propylene and butadiene.

Another object of the present invention is to provide a method for the production of spinnable polyhexamethylene adipamide which utilizes equimolar mixtures of adiponitrile and hexamethylene diamine which are in a liquid state at room temperatures with the addition of a small amount of water and which can be shipped conveniently over long distances with minimal ballast.

It is yet another object of the present invention to provide a method for the production of spinnable polyhexamethylene adipamide which is more economical than previous methods with respect to energy requirements and reactant requirements. This fact becomes apparent in light of the following comparisons and examples:

a) Per ton of polyhexamethylene adipamide, approximately 1,160 kg AH-salt is required but only 992 kg of an equimolar mixture of adiponitrile and hexamethylene diamine is required.

b) Per ton of polyhexamethylene adipamide, there are formed according to the method as defined in the present invention, approximately 150 kg of ammonia, gaseous or in watery solution, which, as a saleable by-product, helps to lower the production costs (use, for instance, for fertilizers).

c) Per ton polyhexamethylene adipamide, there must be evaporated, according to the conventional manner (starting from 60% AH-salt solution), about 930 kg of water during the polycondensation.

According to the method as defined in the present invention, only approximately 130 kg water and 150 kg ammonia have to be evaporated for the same quantity of polyamide.

Still another object of the present invention is to provide a method for the production of spinnable polyhexamethylene adipamide, which utilizes ammonia-containing water and the addition of catalysts preferably oxygen-containing compounds of phosphorous, of varying amounts in the form of esters, acids, or their salts, preferably their ammonium salts, to exert an accelerating and stabilizing influence on the total reaction. Typical of such oxygen-containing compounds of phosphorous so utilized are hypophosphorous acid, phosphorous acid, phosphoric acids and phosphonic acids which are advantageously added in the form of esters, acids or as ammonium salts in water solutions. Good results are also being achieved with catalysts selected from derivatives of sulfuric acid, sulfonic acids, boric acid, hydrogen halogen acids and strong organic acids. Catalyst quantities, which are effectively added range from 0.005 to 0.5 weight percent of an equimolar mixture of adiponitrile and hexamethylene diamine. Larger quantities are possible, but do not show any additional advantages.

Yet another object of the present invention is to provide a method for the production of spinnable polyhexamethylene adipamide in which chain controllers in the form of monocarboxylic acids of monamines, in quantities of 2—30 mmol per kg of an equimolar mixture of adiponitrile and hexamethylene diamine, are added at the start of the reaction for the stabilization of the polymer melt so that there is a constant melt viscosity during the later processing operations. As monocarboxylic acids, for example, acetic acid, propionic acid or benzoic acid can be used. Of the monoamines, butylamine, n-hexylamine, n-octylamine and cyclohexylamine are recommended.

An object supplementary to the present invention is the stabilization of the spinnable polyhexamethylene adipamide against light and heat attack depending on the application desired. In particular its use for technical yarns and tire cord requires good stabilization of the polymeric mass and formed fibers against heat and oxygen by adding well-known heat stabilizers such as diarylamines, N-substituted p-phenylenediamines, mercaptobenzimidazoles, copper salts and iodine compounds either alone or in the form of mixtures. Addition may take place prior, during or on completion of the reaction.

In a principal aspect, the present invention relates to the multi-stage conversion of adiponitrile and hexamethylene diamine in the presence of excess water which takes place according to the following summation reaction:

$$n\overset{CN}{\underset{CN}{(CH_2)_4}}+2nH_2O+n\overset{NH_2}{\underset{NH_2}{(CH_2)6}}\rightarrow H[-NH-(CH_2)_6-\overset{H}{N}-\overset{O}{\overset{\|}{C}}(CH_2)_4\overset{O}{\overset{\|}{C}}-]_n-OH+2nNH_3$$

Intermediate products of a low molecular weight are formed from the addition and conversion of nitrile groups with water into different acid amides, for instance, δ-cyanovaleric acid amide and adipic acid diamide. When the reaction conditions, as defined in the present invention and described further hereinafter, are observed, pure adiponitrile is completely converted and disappears after a short reaction period without noteworthy development of ammonia. The acid amides and nitrile amides which formed then react in the form of a transamidation with the amino groups of hexamethylene diamine, forming ammonia, and then reacting further to aminoalkylated acid amides and to the initial polyamide products. A certain part of the saponifications of the nitrile groups or the resulting acid amides into the corresponding acids or ammonium salts is also feasible. As the thermally most unstable compound in this process, the adiponitrile can easily react, intramolecularly, to 2-cyanocyclopentanoneimine which leads to gels and discolorations by further undesirable reactions.

Surprisingly it has been further found, in contrast to the teachings of Onsager, that utilizing the conditions according to the present invention, i.e. using an autogenous pressure of 22—24 bar and the preferred temperatures of more than 225°C, always less than 1% free ammonia is present in the reaction product. Because of the physical conditions according to the present invention, only an ammonia content of 0.30 to 0.45% can be present during the pressure phase in the reaction product. Higher ammonia contents as expressly required by Onsager necessitate higher pressure, i.e. 30 bar as a minimum and temperatures lower than 225°C at the beginning of the reaction.

The advantages, from an economical point of view, are, with the process according to the present invention, quite obvious, as a maximum pressure up to 25 bar and therefore less expensive equipment, shorter reaction times, better product qualities, and less waste water are utilized or obtained.

These and other objects, advantages and features of the invention will be set forth in the detailed description which follows:

Brief description of the drawing

Figure 1 is a flow diagram of the process disclosed herein for the production of spinnable polyamides.

Detailed description of the preferred embodiment

As detailed in Figure 1, hexamethylene diamine 2 and adiponitrile 3 are fed continuously in equimolar

quantities into a heatable preparation boiler 6. At the same time, a catalyzer solution 1, approximately 10% in water, and demineralized water 5 or ammonia-containing water 4 are stirred in. The homogeneous mixture is continuously heated by means of a controllable piston pump 7, by way of a heat exchanger 8, to approximately 220°C and is led to the first stage 9 of the reaction cascade. At a controlled reaction temperature of approximately 245°C and a reaction pressure of 24 bar, gaseous ammonia and water, which are carried along according to partial pressure, escape through the relief valve 12 by way of the dephlegmator 11. The water is condensed to a great extent by the dephlegmator 11 and returned to the reactor 9. The dephlegmator 11 is operated at a temperature of approximately 45°C.

If necessary, pigments, preferably as titanium dioxide, may be added as prepared suspensions in adiponitrile or mixtures of adiponitrile and water as 10—40% suspension concentrates. The pigments are led to the first stage 9 of the reaction cascade by way of line 10 along with dispersion agents, which may be polymetasilicates, polyphosphates or polyvinyl alcohols. The pigment concentrations are preferably 0.1—3 mass %.

Because of the difference in the levels of the reaction cascade, the partially converted reaction product enters continuously into the second stage 13 of the reaction cascade with equal pressure. Further heating of the reaction mass to 270 to 280°C takes place in the second stage 13.

Released ammonia and water flow from the second stage 13 to the common relief valve 12 also by way of a dephlegmator 14. The water is condensed for the greatest part by the dephlegmator 14 and then travels again to the reactor 13. The working temperature of the dephlegmator 14 is at approximately 55°C. Released ammonia and also water, in small quantities, flow by way of a condensing receiver 16, with an attached cooler 19, at a temperature of approximately 35°C, to a separate ammonia recovery 25.

The polyamide precondensate from the second stage 13 of the reaction cascade flows by way of a controlled relief valve 22 into a stirred polycondensation reactor 15, which has a working pressure of between 1.5 and 3 bar, to which unsaturated $H_2O$ vapor or inert gases 20 can be added. Ammonia is released from the reactor 15 and flows jointly with excess water to the descending cooler 17 by way of the relief valve 18 and subsequently flows into the condensating receiver 16. The ammonia, which is not dissolved under normal pressure in the process, escapes together with the ammonia from the reaction cascade to the ammonia recovery 25 by way of the rising cooler 19.

In a finisher, the reaction mass, which has nearly been converted in the polycondensation reactor 15 at 285°C, is subsequently put into the desired final state, which is chosen depending on the degree of polymerization desired. For this purpose, the polyamide mass present in the polycondensation reactor 15 is continuously discharged by means of a gear pump 23 and, by means of the heat exchanger 21, is brought to temperatures between 290 and 300°C and led to a finisher system which consists of an expansion vessel 24 attached for final relief of the rest of the volatile compounds, connected to a screw reactor 28. In the expansion vessel 24, heated up inert gases 27, in form of pure nitrogen or unsaturated water vapor, can be added in order to accelerate the rest of the polycondensation, and further additives can be added by the line 26.

In the present invention, a double screw reactor 28 with an additional degassing zone 29 is used. Depending on the intended use, the polyamide product has adjustable relative solution viscosities between $n_{rel}$. 2.3—3.2. (The relative solution viscosity is measured here in a concentration of 1 g/100 ml, 96% sulfuric acid at 25°C.) The spinnable polyamide melt produced in the finisher can be led to the usual granulate production as well as to a direct spinning process.

For the following applications, the following relative solution viscosities are common for polyhexamethylene adipamide:

| | rel. visc. |
|---|---|
| a) textile filaments | 2.4—2.6 |
| b) carpet yarn | 2.7—2.8 |
| c) technical filaments and tire cord | 2.8—3.2 |

In addition to its use as a fiber, these polyamides can be used in any other application calling for the use of a nylon-type polymer. For example, these polyamides can be used as plastics, films and molding compounds.

The diamines suitable for use in this reaction are the diamines containing from 1 through 20 carbon atoms. The diamines may be aliphatic, straight chain or branched, or aromatic or they may contain a hetero-atom. Also useful are substituted diamines, provided the substituents are inert under the reaction conditions. Preferably the diamines are the aliphatic or aromatic diamines which contain from 4 through 12 carbon atoms such as hexamethylene diamine, 1,4-diaminobutane, 1,5-diaminopentane, 1,8-diaminoctane, 1,10-diaminodecane, 1,12-diaminododecane, 2,5-dimethylhexane-2,5 diamine 4,4'-diaminodicyclohexylsulfur, p,p'-diaminodicyclohexylmethane, 4,4'-diaminodicyclohexylether, octamethylenediamine, tetramethylenediamine and the like, i.e. diamines of the formula:

$$R'HN—R''—NHR'$$

wherein R'' is an alkylene or arylene group containing 4 to 12 carbon atoms and each R' is independently hydrogen or a univalent organic radical. The most preferred diamine is an α,ω aliphatic diamine.

The dinitriles which can be used in accordance with the inventive reaction are dinitriles containing from 2 through 20 carbon atoms. These dinitriles may be aliphatic, straight chain or branched, or aromatic or they may contain a hetero-atom. Also useful are substituted dinitriles so long as the substituents are inert under the reaction conditions. Most preferably, however, the dinitriles are the aliphatic or aromatic dinitriles which contain from 4 through 12 carbon atoms, such as adiponitrile, succinonitrile, glutaronitrile, suberonitrile, sebaconitrile, 1,10-decanedinitrile, isophthalonitrile, terephthalonitrile and the like; i.e. dinitriles of the formula:

$$NC—R—CN$$

wherein R is an alkylene or arylene group of 2 to 10 carbon atoms.

The oxygen-containing phosphorous catalysts described above also include alkyl or aryl phosphinic acid and alkyl or aryl phosphonic acid or their esters or ammonium or ammonium alkyl salts thereof. In addition catalysts selected from the group consisting of (1) an oxygen-containing boron compound, (2) an acidic oxygen-containing sulfur compound and (3) a hydrogen halide or ammonium and ammonium alkyl salts thereof have been found to be useful in this process.

As discussed above, it is preferred commercially to run this process continuously, in a reaction cascade under the disclosed reaction conditions. However, the reaction can also be performed with very simple equipment under a broad range of process conditions.

This reaction is normally carried out in a pressure vessel in the absence of air. The reaction is also normally initially carried out at superatmospheric pressure with a later reduction to atmospheric pressure. It is preferable to then remove the excess water and ammonia from the reaction system by either reducing the pressure to subatmospheric pressure or by adding an inert gas. During this polymerization it is preferable to release the ammonia while at least initially maintaining some or all of the water in the reaction system. This can be accomplished, for example, by the use of return flow coolers.

The method as defined in the present invention is better understood with reference to the following examples.

Examples 1—18

Equimolar quantities of adiponitrile and hexamethylene diamine, partly varying quantities of water, and catalytic quantities of inorganic or organic compounds, as detailed in Table 1, with 100 ppm silicon-antifoam additive, were put into a stirring autoclave of stainless steel having a volume of 2 liters and were mixed. The autoclave was provided with a dephlegmator and, after a pressure relief valve, with a descending cooler and was steplessly heated continuously and controllably with a heat transfer oil. Before the start of each test, the filled autoclave was rinsed with nitrogen several times and subsequently put into a pressureless state.

With continuous stirring, the reaction mixture in the autoclave was heated in such a way that a product temperature of 225°C was reached within 45 minutes. The autogenous pressure was then between 22—24 bar. During a pressure period of 50 minutes, further heating was done, the developed ammonia being continuously released via the dephlegmator. Simultaneously, evaporated water was returned as dephlegmate into the autoclave.

After a further 135 minutes, a product temperature of 275—285°C was reached. After that a pressure relief period followed during which the pressure was lowered from 22—24 bar to 1 bar within 60 minutes. Thereupon, an equalization period of 45 minutes followed with the subsequent emptying of the autoclave contents being accomplished by pressing out with excess nitrogen pressure.

As far as possible, the obtained polyamides were granulated, dried and analyzed. The obtained degree of polymerization was calculated by the determination of the relative viscosity of the solution. (Polyamide concentration: 1 g polyamide was dissolved in 100 ml 96% sulfuric acid and the viscosity measurement was carried out at 25°C in an Ubbelohde viscosimeter). The results of the examples are found in Table 1.

Example 19

From a preparation vessel blanketed with purified nitrogen, a homogeneous mixture of

38.0% adiponitrile
40.8% hexamethylenediamine
21.1% water
0.1% phosphorous acid

is, at a rate of 1 kg/h, continuously fed to a reaction cascade using a metering pump. The reaction cascade consists of two 2—1 mixing reactors whose respective filling level amounts to 75%. Both mixing reactors are equipped with partial condensers and a joint gas system. They may be operated at different temperatures, their filling levels being, however, identical.

During continuous operation, the following parameters require to be observed:

| | | |
|---|---|---|
| Reactor I: | Pressure: | 24 bar |
| | Temperature: | 242°C |
| | Dephlegmator temperature: | 55°C |
| Reactor II: | Pressure: | 24 bar |
| | Temperature: | 265—270°C |

After cooling to 30°C, the ammonium gas stream from Reactor I and II amounts to approximately 173 l/h.

The reaction product obtained from Reactor II is continuously fed to a mixing vessel heated to 280°C releasing the pressure to 5—6 bar, while the water vapours forming are condensed with the aid of a descending cooler.

From the mixing vessel, a clear colourless pre-polycondensate is periodically withdrawn, which then solidifies to a white mass of $n_{rel}$ approximately 1.8.

As is well known, this pre-polycondensate may be further polymerized, either continuously or discontinuously, to form spinnable highly molecular polyhexamethylene adipamide.

Moreover, it is also well possible to polymerize it by way of solid-state polycondensation.

TABLE 1

| Test No. | Parts adiponitrile | Parts hexamethylene diamine | Parts water | Dephlegmator | Catalyzer type | Parts catalyzer | Pressure in bar | Rel. viscosity | Rel. viscosity according to ASTM | Spinnable |
|---|---|---|---|---|---|---|---|---|---|---|
| 1 | 216 | 232.4 | 366 | – | — | — | 22 | 2.15 | 24.5 | conditional |
| 2 | 216 | 232.4 | 366 | – | phosphoric acid | 0.15 | 22 | 2.50 | 41.5 | good |
| 3 | 216 | 232.4 | 366 | – | phosphoric acid | 0.15 | 22 | 2.53 | 42.7 | good |
| 4 | 216 | 232.4 | 366 | – | phosphorous acid | 0.15 | 22 | 2.52 | 42.0 | good |
| 5 | 216 | 232.4 | 120 | – | — | — | 22 | 1.25 | — | no |
| 6 | 216 | 232.4 | 120 | + | — | — | 22 | 2.20 | 28.0 | conditional |
| 7 | 216 | 232.4 | 120 | + | phenylphosphonic acid | 0.25 | 22 | 2.60 | 46.5 | good |
| 8 | 216 | 232.4 | 180 | + | di-ammonium phosphate | 0.15 | 22 | 2.75 | 55.0 | good |
| 9 | 216 | 232.4 | 180 | + | triphenylphosphate | 0.45 | 22 | 2.65 | 49.5 | good |
| 10 | 216 | 232.4 | 125 | + | without | — | 22 | 1.95 | <20 | no |
| 11 | 216 | 232.4 | 125 | + | 4-toluenesulfonic acid | 0.72 | 24 | 2.50 | 41.5 | good |
| 12 | 216 | 232.4 | 125 | + | 2-naphthalenesulfonic acid | 0.81 | 24 | 2.51 | 42.0 | good |
| 13 | 216 | 232.4 | 125 | + | boric acid | 0.47 | 24 | 2.25 | 30.2 | good |
| 14 | 216 | 232.4 | 125 | + | oxalic acid | 0.70 | 24 | 2.22 | 29.0 | conditional |
| 15 | 216 | 232.4 | 125 | + | hydrogen iodide | 0.49 | 24 | 2.45 | 39.1 | good |
| 16 | 216 | 232.4 | 125 | + | ammonium sulfamate | 0.65 | 24 | 2.42 | 37.7 | good |
| 17 | 216 | 232.4 | 125 | + | ammonium iodide | 0.55 | 24 | 2.48 | 40.6 | good |
| 18 | 216 | 232.4 | 125 | + | benzene phosphinic acid | 0.58 | 24 | 2.51 | 42.1 | good |

**Claims**

1. A method for the production of a polyamide, comprising contacting a dinitrile, an aliphatic diamine and excess water, characterized by the presence of a catalytic amount of an oxygen containing phosphorous compound, wherein the reaction takes place in the presence of less than 1% by weight of ammonia in the liquid phase.

2. The method of claim 1 wherein the dinitrile is adiponitrile, the diamine is hexamethylene diamine and the polyamide is polyhexamethylene adipamide.

3. The method of claim 1 wherein the oxygen containing phosphorous compound is selected from the group consisting of (1) hypophosphorous acid; (2) phosphorous acid; (3) phosphoric acid; and (4) phosphonic acid and their esters.

4. The method of claim 1 wherein the oxygen containing phosphorous compound is selected from the group consisting of (1) phosphoric acid or esters and salts thereof; (2) phosphorous acid or esters and salts thereof; (3) hypophosphorous acid or esters and salts thereof; (4) alkyl or aryl phosphonic acid or esters and salts thereof; and (5) alkyl or aryl phosphinic acid or esters and salts thereof.

5. The method of claim 4 wherein the catalyst is an ammonium or ammonium alkyl salt of the acid.

6. The method of claim 1 wherein the catalyst is selected from the group consisting of phosphoric acid, phosphorous acid, phenyl phosphonic acid, phenyl phosphinic acid, or ammonium or ammonium alkyl salts thereof.

7. The method of claim 1 wherein the dinitrile, diamine, water and catalyst are converted into a polyamide approximately continuously in a reaction cascade of at least two stages, said reaction cascade being at a temperature of greater than 150°C and at superatmospheric pressure.

8. The method of claim 1 wherein the ammonia is continuously removed from the reaction vessel.

9. The method of claim 1 wherein excess water and ammonia are removed from the reaction system of either reducing the pressure to subatmospheric pressure or by adding an inert gas.

10. The method of claim 1 wherein spinnable polyhexamethylene adipamide is produced from adiponitrile and hexamethylene diamine in the presence of excess water at an elevated temperature and superatmospheric pressure, wherein said process comprises:

(a) feeding continuously equimolar quantities of adiponitrile and hexamethylene diamine into a heatable preparation vessel, said vessel being at a temperature of greater than 30°C;

(b) introducing an excess of water into said vessel in the presence of catalytically-acting quantities of oxygen containing compounds of phosphorous thereby forming an initial mixture;

(c) converting approximately continuously said adiponitrile, said hexamethylene diamine and said water in a reaction cascade of at least 2 stages, said reaction cascade being at a temperature of greater than 150°C and at a superatmospheric pressure;

(d) forming initial polycondensate products of more than 65% and gaseous ammonia;

(e) allowing the escape of said formed gaseous ammonia continuously at a superatmospheric pressure by means of return flow coolers;

(f) relieving the pressure of said initial polycondensate product in a step-wise fashion;

(g) heating said initial polycondensate product while said pressure is relieved to approximately atmospheric pressure; and

(h) continuing the polycondensation process to remove excess water and ammonia thereby producing said polyhexamethylene adipamide.

11. The method of claim 9 wherein the inert gas is at least one of nitrogen or water vapor.

12. The method of claim 1 wherein a pigment is added thereto.

13. The method of claim 12 wherein said pigment is titanium dioxide.

14. The method of claim 12 wherein the pigment, a dispersing agent and adiponitrile are added in the form of a suspension.

15. The method of claim 14 wherein said dispersion agent is selected from the group consisting of polymetasilicates, polyphosphates and polyvinyl alcohols.

16. The method of claim 1 wherein the reaction mixture contains 15 to 45% by weight of water based on the total weight of the dinitrile, diamine and water.

17. The method of claim 7 wherein said reaction cascade functions without a recycle of the product.

18. The method of claim 1 wherein said process is conducted at a temperature between 220°C and 300°C.

19. The method of claim 1 wherein the pressure is maintained above 20 bar until at least 65 mole % of the nitrile has been converted into polyamide.

20. The method of claim 1 wherein means are provided for releasing produced ammonia while maintaining at least part of the water in the reaction system.

21. The method of claim 20 wherein said means are a return flow cooler.

22. The method of claim 1 wherein said catalyst is present in quantities of 0.001 to 1 weight percent based on the total weight of the diamine, dinitrile and water.

23. The method of claim 1 wherein a chain controller in concentrations of 1—40 mmol/kg of water-free starting mixture is added thereto.

24. The method of claim 23 wherein the chain controller is selected from the group consisting of monocarboxylic acids and monoamines or mixtures thereof.

25. The method of claim 1 wherein heat and light stabilizers are added thereto.

26. The method of claim 1 wherein the catalyst is phosphoric acid or an ester or ammonium or ammonium alkyl salt thereof.

27. The method of claim 1 wherein the catalyst is phosphorous acid or an ester or ammonium or ammonium alkyl salt thereof.

28. A method for the production of a polyamide, comprising contacting a dinitrile, an aliphatic diamine and excess water, characterized by the presence of a catalyst selected from the group consisting of (1) an oxygen-containing boron compound, (2) an acidic oxygen-containing sulfur compound and (3) a hydrogen halide or ammonium and ammonium alkyl salts thereof, wherein the reaction takes place in the presence of less than 1% by weight of ammonia in the liquid phase.

29. The method of claim 28 wherein said catalyst is selected from the group consisting of boric acid, hydrogen iodide, ammonium iodide, ammonium sulfamate, 4-toluenesulfonic acid, and 2-naphthalenesulfonic acid.

30. The method of claim 28 wherein said dinitrile is adiponitrile and said diamine is hexamethylene diamine.

31. The method of claims 1 and 28 wherein said dinitrile is selected from the group consisting of succinonitrile, glutaronitrile, suberonitrile, sebaconitrile, 1,10-decanedinitrile, isophthalonitrile, and terephthalonitrile.

32. The method of claims 1 and 28 wherein said diamine is selected from the group consisting of 1,4-diaminobutane, 1,5-diaminopentane, 1,8-diaminoctane, 1,10-diaminodecane, 1,12-diaminododecane, 2,5-dimethylhexane-2,5-diamine, p,p'-diaminodicyclohexylmethane, 4,4'-diaminodicyclohexylether, 4,4'-diaminodicyclohexylsulfur, octamethylenediamine, and tetramethylenediamine.

**Patentansprüche**

1. Ein Verfahren für die Herstellung eines Polyamids, umfassend die Kontaktierung eines Dinitrils, eines aliphatischen Diamins und eines Wasserüberschusses, gekennzeichnet durch die Gegenwart einer katalytischen Menge einer sauerstoffenthaltenden Phosphorverbindung, worin die Reaktion in der Gegenwart von weniger als 1 Gewichts% Ammoniak in der flüssigen Phase stattfindet.

2. Das Verfahren nach Anspruch 1 worin das Dinitril Adipinsäuredinitril ist, das Diamin Hexamethylendiamin ist und das Polyamid Polyhexamethylenadipamid ist.

3. Das Verfahren nach Anspruch 1 worin die sauerstoffenthaltende Phosphorverbindung ausgewählt ist aus der Gruppe bestehend aus (1) hypophosphorige Säure; (2) phosphorige Säure; (3) Phosphorsäure; und (4) Phosphonsäure und ihre Ester.

4. Das Verfahren nach Anspruch 1 worin die sauerstoffenthaltende Phosphorverbindung ausgewählt ist aus der Gruppe bestehend aus (1) Phosphorsäure oder Ester und Salze davon; (2) phosphorige Säure oder Ester und Salze davon; (3) hypophosphorige Säure oder Ester und Salze davon; (4) Alkyl- oder Arylphosphonsäure oder Ester und Salze davon; und (5) Alkyl- oder Arylphosphinsäure oder Ester und Salze davon.

5. Das Verfahren nach Anspruch 4 worin der Katalysator ein Ammonium- oder Ammoniumalkylsalz der Säure ist.

6. Das Verfahren nach Anspruch 1 worin der Katalysator ausgewählt ist aus der Gruppe bestehend aus Phosphorsäure, phosphorige Säure, Phenylphosphonsäure, Phenylphosphinsäure, oder Ammonium- oder Ammoniumalkylsalze davon.

7. Das Verfahren nach Anspruch 1 worin das Dinitril, das Diamin, das Wasser und der Katalysator annähernd kontinuierlich in einer Reaktionskaskade von mindestens zwei Stufen zu einem Polyamid umgewandelt werden, die vorerwähnte Reaktionskaskade befindet sich bei einer Temperatur von größer als 150°C und bei überatmosphärischem Druck.

8. Das Verfahren nach Anspruch 1 worin das Ammoniak kontinuierlich aus dem Reaktionsgefäß entfernt wird.

9. Das Verfahren nach Anspruch 1 worin der Wasserüberschuß und das Ammoniak aus dem Reaktionssystem entweder durch Verringerung des Druckes auf unteratmosphärischen Druck oder durch Zusetzen eines Inertgases entfernt wird.

10. Das Verfahren nach Anspruch 1 worin verspinnbares Polyhexamethylenadipamid hergestellt wird aus Adipinsäuredinitril und Hexamethylendiamin in der Gegenwart eines Wasserüberschusses bei einer erhöhten Temperatur und überatmosphärischem Druck, worin das vorerwähnte Verfahren umfaßt:

(a) Kontinuierliche Zuführung äquimolarer Mengen von Adipinsäuredinitril und Hexamethylendiamin zu einem beheizbaren Ansatzgefäß, das vorerwähnte Gefäß befindet sich bei einer Temperatur von größer als 30°C;

(b) Einführung eines Überschusses an Wasser in das vorerwähnte Gefäß in der Gegenwart von katalytisch wirksamen Mengen sauerstoffenthaltender Phosphorverbindungen zur Bildung einer Anfangsmischung;

(c) annähernd kontinuierliche Umwandlung des vorerwähnten Adipinsäuredinitrils, des vorerwähnten

Hexamethylendiamins und des vorerwähnten Wassers in einer Reaktionskaskade von mindestens 2 Stufen, die vorerwähnte Reaktionskaskade befindet sich bei einer Temperatur von größer als 150°C und bei einem überatmosphärischen Druck;

(d) Bildung anfänglicher Polykondensationsprodukte von mehr als 65% und gasförmigen Ammoniaks;

(e) Ermöglichung des kontinuierlichen Entweichens des vorerwähnten gebildeten gasförmigen Ammoniaks bei einem überatmosphärischen Druck mittels Rückflußkühler;

(f) stufenweises Ablassen des Druckes von vorerwähntem anfänglichen Polykondensationsprodukt;

(g) Erhitzen des vorerwähnten anfänglichen Polykondensationsprodukts während der vorerwähnte Druck bis annähernd Atmosphärendruck abgelassen wird; und

(h) Fortsetzen des Polykondensationsverfahrens zur Entfernung des Wasserüberschusses und des Ammoniaks zur Herstellung des vorerwähnten Polyhexamethylenadipamids.

11. Das Verfahren nach Anspruch 9 worin das Inertgas mindestens eines von Stickstoff oder Wasserdampf ist.

12. Das Verfahren nach Anspruch 1 worin ein Pigment zugesetzt wird.

13. Das Verfahren nach Anspruch 12 worin das vorerwähnte Pigment Titandioxid ist.

14. Das Verfahren nach Anspruch 12 worin das Pigment, ein Dispersionsmittel und Adipinsäuredinitril in der Form einer Suspension zugesetzt werden.

15. Das Verfahren nach Anspruch 14 worin das vorerwähnte Dispersionsmittel ausgewählt ist aus der Gruppe bestehend aus Polymetasilikaten, Polyphosphaten und Polyvinylalkoholen.

16. Das Verfahren nach Anspruch 1 worin die Reaktionsmischung 15 bis 45 Gewichts% Wasser bezogen auf das Gesamtgewicht des Dinitrils, des Diamins und des Wassers enthält.

17. Das Verfahren nach Anspruch 7 worin die vorerwähnte Reaktionskaskade ohne einen Umlauf des Produkts arbeitet.

18. Das Verfahren nach Anspruch 1 worin das vererwähnte Verfahren bei einer Temperatur zwischen 220°C und 300°C durchgeführt wird.

19. Das Verfahren nach Anspruch 1 worin der Druck oberhalb 20 bar aufrechterhalten wird bis mindestens 65 Mol% des Nitrils zu Polyamid umgewandelt worden sind.

20. Das Verfahren nach Anspruch 1 worin Mittel vorgesehen sind für die Freigabe des erzeugten Ammoniaks während mindestens ein Teil des Wassers in dem Reaktionssystem beibehalten wird.

21. Das Verfahren nach Anspruch 20 worin die vorerwähnten Mittel ein Rückflußkühler sind.

22. Das Verfahren nach Anspruch 1 worin der vorerwähnte Katalysator in Mengen von 0,001 bis 1 Gewichtsprozent bezogen auf das Gesamtgewicht des Diamins, des Dinitrils und des Wassers zugegen ist.

23. Das Verfahren nach Anspruch 1 worin ein Kettenregler in Konzentrationen von 1—40 mmol/kg der wasserfreien Ausgangsmischung dazu zugesetzt wird.

24. Das Verfahren nach Anspruch 23 worin der Kettenregler ausgewählt ist aus der Gruppe bestehend aus Monocarbonsäuren und Monoaminen oder Mischungen davon.

25. Das Verfahren nach Anspruch 1 worin Hitze- und Lichtstabilisatoren dazu zugesetzt werden.

26. Das Verfahren nach Anspruch 1 worin der Katalysator Phosphorsäure oder ein Ester oder ein Ammonium- oder Ammoniumalkylsalz davon ist.

27. Das Verfahren nach Anspruch 1 worin der Katalysator phosphorige Säure oder ein Ester oder ein Ammonium- oder Ammoniumalkylsalz davon ist.

28. Ein Verfahren für die Herstellung eines Polyamides, umfassend die Kontaktierung eines Dinitriles, eines aliphatischen Diamins und eines Wasserüberschusses, gekennzeichnet durch die Gegenwart eines Katalysators ausgewählt aus der Gruppe bestehend aus (1) einer sauerstoffenthaltenden Borverbindung, (2) einer sauren sauerstoffenthaltenden Schwefelverbindung und (3) einem Halogenwasserstoff oder Ammonium- und Ammoniumalkylsalzen davon, worin die Reaktion in der Gegenwart von weniger als 1 Gewichts% Ammoniak in der flüssigen Phase stattfindet.

29. Das Verfahren nach Anspruch 28 worin der vorerwähnte Katalysator ausgewählt ist aus der Gruppe bestehend aus Borsäure, Jodwasserstoff, Ammoniumjodid, Ammoniumsulfamat, 4-Toluolsulfonsäure, und 2-Naphthalinsulfonsäure.

30. Das Verfahren nach Anspruch 28 worin das vorerwähnte Dinitril Adipinsäuredinitril ist und das vorerwähnte Diamin Hexamethylendiamin ist.

31. Das Verfahren nach den Ansprüchen 1 und 28 worin das vorerwähnte Dinitril ausgewählt ist aus der Gruppe bestehend aus Succinonitril, Glutaronitril, Suberonitril, Sebaconitril, 1,10-Decandinitril, Isophthalonitril und Terephthalonitril.

32. Das Verfahren nach den Ansprüchen 1 und 28 worin das vorerwähnte Diamin ausgewählt ist aus der Gruppe bestehend aus 1,4-Diaminobutan, 1,5-Diaminopentan, 1,8-Diaminoctan, 1,10-Diaminodecan, 1,12-Diaminododecan, 2,5-Dimethylhexan-2,5-diamin, p,p'-Diaminodicyclohexylmethan, 4,4'-Diaminodicyclohexyläther, 4,4'-Diaminodicyclohexylschwefel, Octamethylendiamin, und Tetramethylendiamin.

**Revendications**

1. Un procédé de production d'un polyamide, comprenant la mise en contact d'un dinitrile, d'une diamine aliphatique et d'un excès d'eau, caractérisé par la présence d'une quantité catalytique d'un

composé du phosphore contenant de l'oxygène, et selon lequel la réaction a lieu en présence de moins de 1% en poids d'ammoniaque dans la phase liquide.

2. Le procédé selon la revendication 1 selon lequel le dinitrile est l'adiponitrile, la diamine est l'hexaméthylène diamine et le polyamide est le polyhexaméthylène adipamide.

3. Le procédé selon la revendication 1 selon lequel le composé du phosphore contenant de l'oxygène est sélectionné dans le groupe comprenant (1) l'acide hypophosphoreux; (2) l'acide phosphoreux; (3) l'acide phosphorique; et (4) l'acide phosphonique, et leurs esters.

4. Le procédé selon la revendication 1 selon lequel le composé du phosphore contenant de l'oxygène est sélectionné dans le groupe comprenant (1) l'acide phosphorique ou ses esters et ses sels; (2) l'acide phosphoreux ou ses esters et ses sels; (3) l'acide hypophosphoreux ou ses esters et ses sels; (4) l'acide alkyl ou aryl phosphorique ou ses esters et ses sels; et (5) l'acide alkyl ou aryl phosphinique ou ses esters et ses sels.

5. Le procédé selon la revendication 4, selon lequel le catalyseur est un sel d'ammonium ou d'ammonium alkyle de l'acide.

6. Le procédé selon la revendication 1, selon lequel le catalyseur est sélectionné dans le groupe comprenant l'acide phosphorique, l'acide phosphoreux, l'acide phénylphosphonique, l'acide phénylphosphinique, ou les sels d'ammonium ou d'ammonium alkyle de ceux-ci.

7. Le procédé selon la revendication 1, selon lequel le dinitrile, la diamine, l'eau et le catalyseur sont convertis en un polyamide approximativement en continu dans une cascade de réactions d'au moins deux étages, cette cascade de réactions étant à une température supérieure à 150°C et à une pression suratmosphérique.

8. Le procédé selon la revendication 1 selon lequel l'ammoniaque est enlevée en continu du récipient de réactions.

9. Le procédé selon la revendication 1 selon lequel l'excès d'eau et l'ammoniaque sont séparés du système de réactions soit par réduction de la pression à une pression sous-atmosphérique, soit par addition d'un gaz inerte.

10. Le procédé selon la revendication 1 selon lequel du polyhexaméthylène adipamide filable est produit à partir de l'adiponitrile et de l'hexaméthylène diamine en présence d'un excès d'eau à une température élevée et à une pression suratmosphérique, selon lequel ledit procédé consistant:

(a) à alimenter en continu des quantités équimolaires d'adiponitrile et d'hexaméthylène diamine dans un récipient de préparation susceptible d'être chauffé, ledit récipient étant à une température supérieure à 30°C;

(b) à introduire un excès d'eau dans ce récipient en présence de quantités catalytiques de composés du phosphore contenant de l'oxygène pour former un mélange initial;

(c) à convertir approximativement en continu cet adiponitrile, cette hexaméthylène diamine et cette eau dans une cascade de réactions d'eau moins deux étages, cette cascade de réactions étant à une température supérieure à 150°C et à une pression suratmosphérique;

(d) à former des produits polycondensats initiaux de plus de 65% et de l'ammoniaque gazeuse;

(e) à laisser s'échapper cette ammoniaque gazeuse formée, en continu à une pression suratmosphérique à l'aide de réfrigérants à courant de retour;

(f) à détendre la pression de ce produit polycondensat initial, d'une manière échelonnée;

(g) à chauffer ce produit polycondensat initial pendant que cette pression est détendue approximativement à la pression atmosphérique; et

(h) à continuer le procédé de polycondensation pour sèparer l'excès d'eau et l'ammoniaque pour produire ce polyhexaméthylène adipamide.

11. Le procédé selon la revendication 9 selon lequel le gaz inerte est au moins l'un des produits azotés ou la vapeur d'eau.

12. Le procédé selon la revendication 1 selon lequel un pigment y est ajouté.

13. Le procédé selon la revendication 12 selon lequel ce pigment est du bioxyde de titane.

14. Le procédé selon la revendication 12 selon lequel le pigment, un agent dispersant et l'adiponitrile sont ajoutés sous la forme d'une suspension.

15. Le procédé selon la revendication 14 selon lequel cet agent dispersant est sélectionné dans le groupe comprenant les polymétasilicates, les polyphosphates et les alcools polyvinyliques.

16. Le procédé selon la revendication 1 selon lequel le mélange réactionnel contient 15 à 45% en poids d'eau basé sur le poids total du dinitrile, de la diamine et de l'eau.

17. Le procédé selon la revendication 7 selon lequel cette cascade de réactions fonctionne sans recyclage de produit.

18. Le procédé selon la revendication 1 selon lequel ce procédé est conduit à une température comprise entre 220°C et 300°C.

19. Le procédé selon la revendication 1 selon lequel la pression est maintenue au-dessus de 20 bars jusqu'à ce qu'au moins 65% molaires du nitrile aient été convertis en polyamide.

20. Le procédé selon la revendication 1 selon lequel un dispositif est prévu pour libérer l'ammoniaque produite tout en maintenant au moins une partie de l'eau dans le système de réaction.

21. Le procédé selon la revendication 20 selon lequel ce dispositif est un réfrigérant à courant de retour.

22. Le procédé selon la revendication 1 selon lequel ce catalyseur est présent en quantités de 0,001 à 1% en poids basé sur le poids total de la diamine, du dinitrile et de l'eau.

23. Le procédé selon la revendication 1 selon lequel un agent de contrôle de chaîne à des concentrations de 1—40 mmol/kg de mélange de départ exempt d'eau y est ajouté.

24. Le procédé selon la revendication 23 selon lequel l'agent de contrôle de chaîne est sélectionné dans le groupe comprenant les acides monocarboxyliques et les monoamines ou leurs mélanges.

25. Le procédé selon la revendication 1 selon lequel les stabilisants vis-à-vis de la chaleur et de la lumière y sont ajoutés.

26. Le procédé selon la revendication 1 selon lequel le catalyseur est l'acide phosphorique ou un ester ou un sel d'ammonium ou d'ammonium alkyle de cet acide.

27. Le procédé selon la revendication 1 selon lequel le catalyseur est l'acide phosphoreux ou un ester ou un sel d'ammonium ou d'ammonium alkyle de cet acide.

28. Un procédé de production d'un polyamide comprenant la mise en contact d'un dinitrile, d'une diamine aliphatique et d'un excès d'eau, caractérisé par la présence d'un catalyseur sélectionné dans le groupe comprenant:

(1) un composé acide du bore contenant de l'oxygène,

(2) un composé acid du soufre contenant de l'oxygène, et

(3) un acide halogénhydrique ou un sel d'ammonium ou d'ammonium alkyle de cet acide, selon lequel la réaction a lieu en présence de moins de 1% en poids d'ammoniaque dans la phase liquide.

29. Le procédé selon la revendication 28 selon lequel ce catalyseur est sélectionné dans le groupe comprenant l'acide borique, l'acide iodhydrique, l'iodure d'ammonium, le sulfamate d'ammonium, l'acide 4-toluènesulfonique et l'acide 2-naphtalènesulfonique.

30. Le procédé selon la revendication 28 selon lequel ce dinitrile est l'adiponitrile et cette diamine est l'hexaméthylène diamine.

31. Le procédé selon les revendications 1 et 28 selon lequel ce dinitrile est sélectionné dans le groupe comprenant: succinonitrile, glutaronitrile, subéronitrile, sébaconitrile, 1,10-décanedinitrile, isophtalonitrile, et téréphtalonitrile.

32. Le procédé selon les revendications 1 et 28 selon lequel cette diamine est sélectionnée dans le groupe comprenant: 1,4-diaminobutane, 1,5-diaminopentane, 1,8-diaminoctane, 1,10-diaminodécane, 1,12-diaminododécane, 2,5-diméthylhexane-2,5-diamine, p,p'-diaminodicyclohexylméthane, 4,4'-diaminodicyclohexyléther, 4,4'-diaminodicyclohexyl-soufre, octaméthylène diamine, et tétraméthylène diamine.

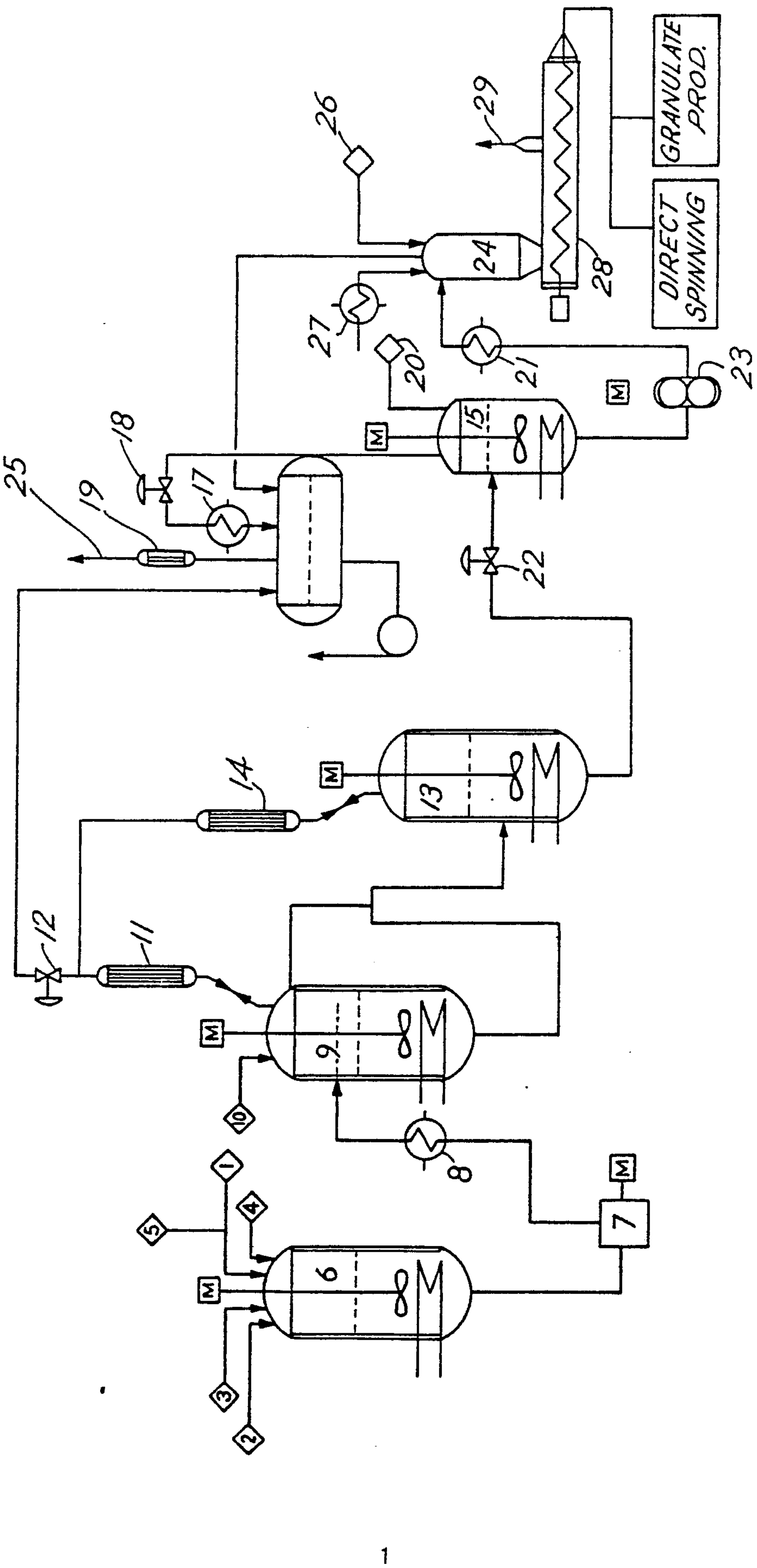
DIRECT SPINNING
GRANULATE PROD.